# EUROPEAN PATENT APPLICATION

(11) **EP 4 814 631 A2**
(43) Date of publication of application: **30.09.2026**
(21) Application number: 26162906.7
(22) Date of filing: 06.03.2026
(51) Int. Cl.: G05B 13/04, G05B 19/418

(54) **SYSTEMS AND METHODS FOR PREDICTIVE CONTROL OF LYOPHILIZATION PROCESS**

(30) Priority: 26.03.2025 IN 202521028665
(71) Applicant: Tata Consultancy Services Limited, Maharashtra (IN)
(72) Inventor: MORE, Mayuresh Hiren, 411028 Pune, Maharashtra (IN); BUDDHIRAJU, Venkata Sudheendrav, 411028 Pune, Maharashtra (IN); RUNKANA, Venkataramana, 411028 Pune, Maharashtra (IN)
(74) Representative: Goddar, Heinz J.

(57) **Abstract**

For developing recipes for new products in the lyophilization system, extensive resource-consuming experiments need to be carried out. The parameters obtained through such experiments are often sub-optimal. Present disclosure provides a system and a method for predictive control of a lyophilization process by capturing the effect that freezing has on the product characteristics and consequently on the drying stages. The system utilizes real-time input from a lyophilization system, and the state estimation models to closely and predictively control the desired attributes of the product and determine optimal operating parameters for a desired product quality based on a comparison of the current state of the lyophilization system with a reference state. Image of the product is captured to identify defects in the vials, trace back to operating conditions and generate recommendations for defect mitigation.

## Description

### CROSS-REFERENCE TO RELATED APPLICATIONS AND PRIORITY

The present application claims priority to Indian application no. 202521028665, filed on March 26, 2025.

### TECHNICAL FIELD

The disclosure herein generally relates to predictive controlling techniques, and, more particularly, to systems and methods for predictive control of lyophilization process.

### BACKGROUND

Final product quality in terms of reconstitution time, moisture content, appearance is not closely controlled with respect to the operating parameters leading to flawed final product vials. The appearance entails elegance of the product/cake (devoid of cracks) and color thereof. The commonly encountered defects in vials are categorized as functional defects and cosmetic/non-functional defects. Functional defects are collapse, melt-back, scorching of the product surface, presence of impurities, cake with excess moisture, etc. Non-functional/Cosmetic defects include streaks, spots, and cracked cake. Although cosmetic defects do not hamper the utility of the product, they may render a product less attractive in the market, causing a loss of customer base. For developing recipes for new products, extensive resource-consuming experiments need to be carried out. The parameters obtained through such experiments are often sub-optimal.

Further, the quality attributes of the product (reconstitution time, moisture, potency, appearance, etc.) are assessed through sampling and off-line analysis. Due to this, it becomes challenging to know if the product is being processed as desired. Since the state of the system during the process is difficult to estimate, mitigating excursions and determining endpoints of the stages becomes a complex task for the user.

Formulations with high concentrations of proteins in such lyophilization system may undergo protein cold denaturation or unfolding. Moreover, crystalline excipients like mannitol may undergo only partial crystallization during freezing leading to them being crystallized in the drying stages or during storage. Post-freezing crystallization of excipients is a leading cause of vial breakage. Also, moisture released due to crystallization of excipients adds to the product, subjecting it to degradation. Annealing is advised for such products with high concentrations or with crystalline excipients. However, selecting an optimal annealing cycle for a given product, that maximally enhances crystallinity of the excipients, reduces the stresses on the proteins, and promotes a homogenous cake structure formation, poses a challenge.

### SUMMARY

Embodiments of the present disclosure present technological improvements as solutions to one or more of the above-mentioned technical problems recognized by the inventors in conventional systems.

For example, in one aspect, there is provided a processor implemented method for predictive control of lyophilization process. The method comprises receiving, via one or more hardware processors, a set of process variables from a Lyophilization chamber, wherein the set of process variables comprises a shelf temperature, and a chamber pressure; predicting, via the one or more hardware processors, a current state of the Lyophilization chamber based on the set of process variables using at least one prediction model, wherein the current state of the Lyophilization chamber comprises at least one of a temperature of a product in one or more vials, stresses due to lyophilization on proteins, a crystallinity of one or more excipients, an ice crystal size distribution, an ice content of the one or more vials, and a bound moisture content of the one or more vials; performing, via the one or more hardware processors, a comparison of the current state of the Lyophilization chamber with a reference state; generating, via the one or more hardware processors, one or more error signals based on the comparison and the current state; and predictively controlling, by using one or more models via the one or more hardware processors, the current state of the Lyophilization chamber through one or more control signals to attain a targeted state of the Lyophilization chamber and a set of state variables, based on the one or more error signals.

In an embodiment, one or more images of the one or more vials are captured and compared with a reference batch image data, to classify the one or more vials as a viable vial or an inviable vial.

In an embodiment, the shelf temperature and the chamber pressure are adjusted based on a first defect type detected in the one or more vials.

In an embodiment, one or more recommendations are generated to mitigate a second defect type detected in the one or more vials.

In an embodiment, the at least one prediction model comprises an annealing stage, a freezing stage, and a plurality of drying stages.

In an embodiment, a cascading effect is determined during one or more operations being performed in the annealing stage, the freezing stage, and the plurality of drying stages.

In an embodiment, a structure of an associated state of the product is predicted based on the cascading effect by using the freezing model, and dynamics of the plurality of the drying stages is predicted based on the structure by using the freezing model.

In an embodiment, the current state of the Lyophilization chamber and an endpoint of the annealing stage, the freezing stage, and the plurality of drying stages are determined using one or more soft sensors.

In an embodiment, the stresses due to lyophilization on the proteins, and the crystallinity of the one or more excipients are predicted at the annealing stage.

In an embodiment, the reference state is obtained by optimizing a plurality of process variables, using the at least one prediction model.

In another aspect, there is provided a processor implemented system for predictive control of lyophilization process. The system comprises: a memory storing instructions; one or more communication interfaces; and one or more hardware processors coupled to the memory via the one or more communication interfaces, wherein the one or more hardware processors are configured by the instructions to: receive a set of process variables from a Lyophilization chamber, wherein the set of process variables comprises a shelf temperature, and a chamber pressure; predict a current state of the Lyophilization chamber based on the set of process variables using at least one prediction model, wherein the current state of the Lyophilization chamber comprises at least one of a temperature of a product in one or more vials, stresses due to lyophilization on proteins, a crystallinity of one or more excipients, an ice crystal size distribution, an ice content of the one or more vials, and a bound moisture content of the one or more vials; perform a comparison of the current state of the Lyophilization chamber with a reference state; generate one or more error signals based on the comparison and the current state; and predictively control, by using one or more models, the current state of the Lyophilization chamber through the one or more control signals to attain a targeted state of the Lyophilization chamber and a set of state variables, based on the one or more error signals.

In an embodiment, one or more images of the one or more vials are captured and compared with a reference batch image data, to classify the one or more vials as a viable vial or an inviable vial.

In an embodiment, the shelf temperature and the chamber pressure are adjusted based on a first defect type detected in the one or more vials.

In an embodiment, one or more recommendations are generated to mitigate a second defect type detected in the one or more vials.

In an embodiment, the at least one prediction model comprises an annealing stage, a freezing stage, and a plurality of drying stages.

In an embodiment, a cascading effect is determined during one or more operations being performed in the annealing stage, the freezing stage, and the plurality of drying stages.

In an embodiment, a structure of an associated state of the product is predicted based on the cascading effect by using the freezing model, and dynamics of the plurality of the drying stages is predicted based on the structure by using the freezing model.

In an embodiment, the current state of the Lyophilization chamber and an endpoint of the annealing stage, the freezing stage, and the plurality of drying stages are determined using one or more soft sensors.

In an embodiment, the stresses due to lyophilization on the proteins, and the crystallinity of the one or more excipients are predicted at the annealing stage.

In an embodiment, the reference state is obtained by optimizing a plurality of process variables, using the at least one prediction model.

In yet another aspect, there are provided one or more non-transitory machine-readable information storage mediums comprising one or more instructions which when executed by one or more hardware processors cause predictive control of lyophilization process by receiving a set of process variables from a Lyophilization chamber, wherein the set of process variables comprises a shelf temperature, and a chamber pressure; predicting a current state of the Lyophilization chamber based on the set of process variables using at least one prediction model, wherein the current state of the Lyophilization chamber comprises at least one of a temperature of a product in one or more vials, stresses due to lyophilization process on proteins, a crystallinity of one or more excipients, an ice crystal size distribution, an ice content of the one or more vials, and a bound moisture content of the one or more vials; performing a comparison of the current state of the Lyophilization chamber with a reference state; generating one or more error signals based on the comparison and the current state; and predictively controlling, by using one or more models, the current state of the Lyophilization chamber through one or more control signals to attain a targeted state of the Lyophilization chamber and a set of state variables, based on the one or more error signals.

In an embodiment, one or more images of the one or more vials are captured and compared with a reference batch image data, to classify the one or more vials as a viable vial or an inviable vial.

In an embodiment, the shelf temperature and the chamber pressure are adjusted based on a first defect type detected in the one or more vials.

In an embodiment, one or more recommendations are generated to mitigate a second defect type detected in the one or more vials.

In an embodiment, the at least one prediction model comprises an annealing stage, a freezing stage, and a plurality of drying stages.

In an embodiment, a cascading effect is determined during one or more operations being performed in the annealing stage, the freezing stage, and the plurality of drying stages.

In an embodiment, a structure of an associated state of the product is predicted based on the cascading effect by using the freezing model, and dynamics of the plurality of the drying stages are predicted based on the structure by using the freezing model.

In an embodiment, the current state of the Lyophilization chamber and an endpoint of the annealing stage, the freezing stage, and the plurality of drying stages are determined using one or more soft sensors.

In an embodiment, the stresses due to lyophilization on the proteins. and the crystallinity of the one or more excipients are predicted at the annealing stage.

In an embodiment, the reference state is obtained by optimizing a plurality of process variables, using the at least one prediction model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for predictive control of lyophilization process, in accordance with an embodiment of the present disclosure.
FIGS. 2A and 2B depict an exemplary high level block diagram of the system of FIG. 1 for predictive control of lyophilization process, in accordance with an embodiment of the present disclosure.
FIG. 3 depicts an exemplary flow chart illustrating a method for predictive control of lyophilization process, using the systems of FIGS. 1-2B, in accordance with an embodiment of the present disclosure.
FIG. 4 depicts a block diagram illustrating a process for predictive control of the current state of the Lyophilization chamber, in accordance with an embodiment of the present disclosure.
FIG. 5, depicts a block diagram of a process parameter determination module illustrating a process for determining process variables, in accordance with an embodiment of the present disclosure.
FIG. 6, depicts a block diagram of a vial inspection module illustrating a process for capturing one or more images of the one or more vials for comparison with a reference batch image data, to classify the one or more vials as a viable vial or an inviable vial, in accordance with an embodiment of the present disclosure.
FIG. 7 depicts a graphical representation illustrating product temperature in vial during freezing stage, in accordance with an embodiment of the present disclosure.
FIG. 8 depicts a graphical representation illustrating product temperature in the vial during a primary drying stage, in accordance with an embodiment of the present disclosure.
FIG. 9 depicts a graphical representation illustrating evolution of the length of frozen layer in the vial during the primary drying stage, in accordance with an embodiment of the present disclosure.
FIG. 10 depicts a graphical representation illustrating evolution of the sorbed moisture during a secondary drying stage, validated against experimental data, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The greatest technology gap that persists is the lack of a physical model for freezing that relates to the final product quality. Freezing is the most influential process in lyophilization. Yet, little is known about its effect on primary and secondary drying. This is due to the stochastic nature of the freezing process and the complex physics of crystal formation that affect the final product structure. Moreover, the defects in the product are not effectively traced back to the processing conditions. The lack of a fully functional freezing model that emphasizes its effect on the product quality requires the user to determine operating conditions through trial-based methods. Even if the operating conditions are determined, they are more likely to be sub-optimal. A set of optimal process conditions would allow the process to be carried out at the minimum possible time without compromising the product quality. Further, absence of in-line detectors that determine product quality is a technology gap in vial inspection. Except for the image analysis equipment, the in-line use of technology for product quality determination is not known in the literature/conventional approaches. Even with image analysis technology, a method to categorize the functional defects, and their root cause analysis in relation to the process conditions is not available.

Determining the state of the lyophilization system requires the user to install physical sensors or soft sensors in the system that determines its state. Use of probes in the vials provides information of their temperature but is impractical given the sheer number of vials and due to sterility issues. Moreover, these probes provide sites for nucleation and thus nucleation remains uncontrolled. Soft sensors are largely unavailable for freezing process that determine the state of the product in the vial - precooling, nucleation, crystal growth, or post-cooling. Moreover, annealing is the least understood process of lyophilization. This is majorly because of the complexity of the process with respect to how the process conditions affect the crystallinity of the excipient or the distribution of proteins in the matrix.

Present disclosure provides systems and methods for predictive control of lyophilization process, optimal parameter determination, soft sensing, product quality inspection. The system implements various models that are integrated into a single process for capturing the effect that freezing has on the product characteristics and consequently on the drying stages. A model-based control framework is implemented by the system of the present disclosure that utilizes real-time inputs from the lyophilization system and the state estimation models to closely control the desired attributes of the product and determine optimal operating parameters for a desired product quality. This greatly reduces the experimental efforts. The end user can employ an automated process rather than an experimental and heuristic based approach and thus get rid of a manual process of determining optimal parameters. The system 100 implements physical sensors that are used here to assess the quality of the final product. The appearance of the product (e.g., cake structure and cake color) is assessed through a camera that captures an image, which is then analyzed to identify defects, if any, and check if it is a viable product. The inclusion of a prediction model (e.g., data-driven model(s) such as Artificial Neural Network model(s), mechanistic model(s)/physics models such as freezing, primary drying stage, secondary drying stage, hybrid model(s), and so on) allows for tracing back the defects to the operating conditions. Such examples of prediction models shall not be construed as limiting the scope of the present disclosure. The implementation of prediction model enables prediction of the state of lyophilization chamber. To determine endpoints the system is equipped with soft sensing capabilities. For major excursions, soft sensors and an alarm system are enabled to identify them and take appropriate action(s). Further, the annealing stage in the prediction module along with the Model-based Optimization module helps identify the annealing protocol for a specific product concentration and excipient. This reduces the risk of degradation of the product or breakage of vials.

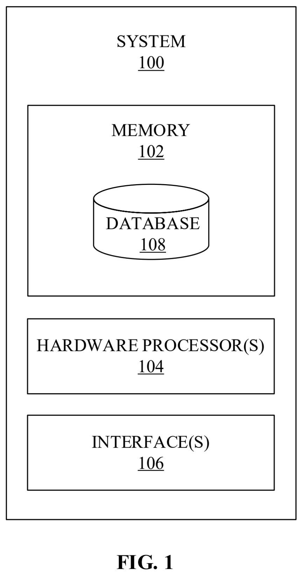

Referring now to the drawings, and more particularly to FIGS. 1 through 10, where similar reference characters denote corresponding features consistently throughout the figures, there are shown preferred embodiments, and these embodiments are described in the context of the following exemplary system and/or method.

FIG. 1 depicts an exemplary system 100 for predictive control of lyophilization process, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to a set of process variables obtained from a Lyophilization chamber. The database 108 further comprises information pertaining to current state of the Lyophilization chamber, one or more signals for predictive control of the Lyophilization chamber, and the like. The database 108 further comprises an experimental data repository that includes data about the variety of products being lyophilized and various lyophilization equipment that are operational in the plant, critical information about the product includes specific heat capacity, density, thermal conductivity, protein concentration, collapse temperature, desired moisture content, etc. which is obtained through preliminary experiments on the product, equipment based experimental data include shelf heat transfer coefficient, choke flow limit, radiative heat transfer view factors, etc., information about the maximum allowable cooling/heating rate, maximum allowable coolant flow, condenser capacity, vacuum pump capacity, etc. These provide the optimization module with appropriate constraints. This data is stored in the repository to be used by the prediction module according to the product being lyophilized and equipment used for the lyophilization. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

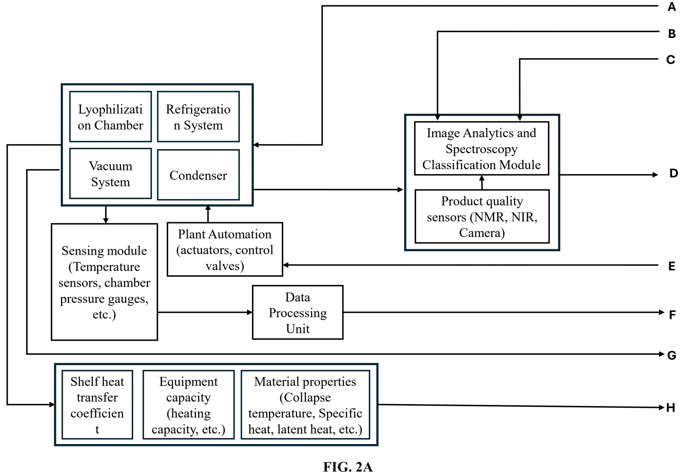

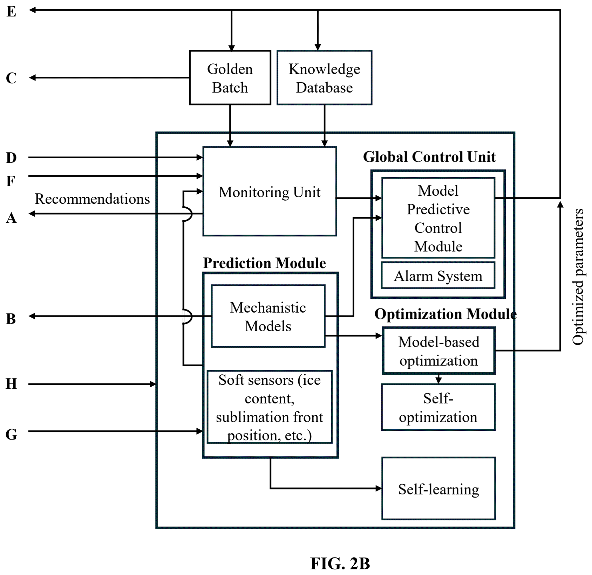

FIGS. 2A and 2B, with reference to FIG. 1, depict an exemplary high level block diagram of the system 100 of FIG. 1 for predictive control of lyophilization process, in accordance with an embodiment of the present disclosure.

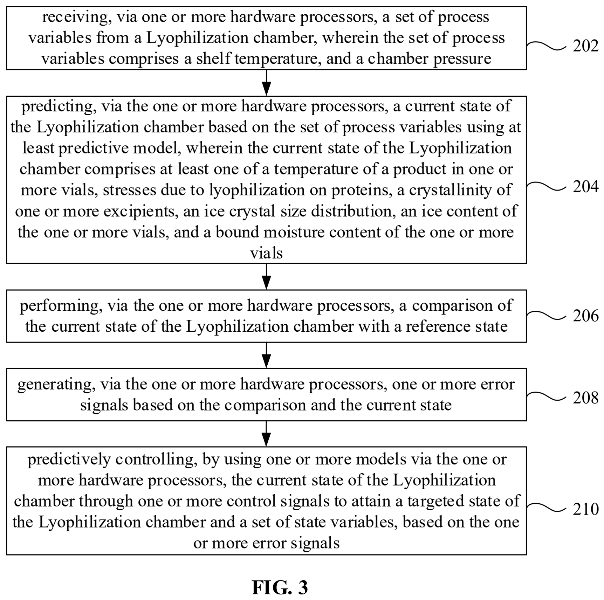

FIG. 3, with reference to FIGS. 1-2B, depicts an exemplary flow chart illustrating a method for predictive control of lyophilization process, using the systems 100 of FIGS. 1-2B, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIGS. 2A-2B, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously
At step 202 of the method of the present disclosure, the one or more hardware processors 104 receive a set of process variables from a Lyophilization chamber. The set of process variables comprises a shelf temperature, and a chamber pressure. The shelf temperature may vary from about 223 K to about 293 K. The chamber pressure may vary from about 10 Pa to about 100000 Pa. One or more sensors equipped in the system 100 collect important information on critical process parameters. Sensors include shelf temperature sensors, pressure gauges for measuring pressure, N2 flow meter, and so on. Various sensors are installed in the refrigeration system as depicted in FIG. 2 to measure the flowrate of the refrigerant, temperature of the refrigerant at inlet and outlet and at intermittent locations, compressor pressure, etc. For the condenser chamber, sensors are installed to measure the temperature of the condenser, mass flow rate of water vapor from the lyophilization chamber to the condenser chamber, Tunable Diode Laser Absorption Spectroscopy (TDLAS) sensors for measuring water content in the duct, etc. More specifically, the system 100 receives inputs of operating conditions - shelf temperature, chamber pressure, condenser temperature, technical fluid temperature and flow rate, etc. from the actual system (e.g., Lyophilization chamber/ Lyophilization system as depicted in FIG. 2) and predicts the state of the system in real time.

At step 204 of the method of the present disclosure, the one or more hardware processors 104 predict a current state of the Lyophilization chamber based on the set of process variables using at least one prediction model. The current state of the Lyophilization chamber comprises a temperature of a product in one or more vials, stresses due to lyophilization on proteins, a crystallinity of one or more excipients, an ice crystal size distribution, an ice content of the one or more vials, and a bound moisture content of the one or more vials, or combinations thereof. The temperature may be about 235 K for primary drying. The stresses on proteins due to lyophilization include cold denaturation and protein aggregation. Crystallinity of excipients like mannitol is about 70% after freezing without annealing. Ice crystal size distribution may be about 30-60 µm. Ice content of the vials may be about 95% of the total moisture content whereas sorbed moisture may be about 5% of total moisture content. The at least one prediction model includes one or more mechanistic models as known in the art. Data pertaining to a product such as specific heat, conductivity, collapse temperature, etc.) and the equipment (e.g., shelf heat transfer coefficient, radiative heat transfer view factors, equipment capacity, choke flow limit, etc.) is received to predict the current state of the Lyophilization chamber. The at least one prediction model comprises an annealing stage (also referred to as a pre-freezing stage and interchangeably used herein), a freezing stage, and a plurality of drying stages.

The annealing stage in the prediction module along with the model-based optimization module helps identify the annealing protocol for a specific product concentration and excipient. This reduces the risk of degradation of the product or breakage of vials. More specifically, in the annealing stage, the system 100 predicts the crystallinity of excipients and the stresses (e.g., stresses such as cold denaturation and protein aggregation caused due to lyophilization) on the proteins. In other words, the system 100 executes the annealing stage to determine optimal annealing conditions. Use of high concentration proteins and/or crystalline excipients like mannitol necessitate employment of annealing. The annealing protocol for a Product A may be in a different form than Product B and needs to be determined through experiments. With the annealing stage of the at least one prediction model, the determination of annealing protocol becomes easier.

The effect of the freezing stage is incorporated by the system and this freezing stage captures detailed knowledge of the physics of freezing and ice crystal formation. Further, the drying stage includes a primary drying stage and a secondary drying stage. Moreover, the drying stage captures information pertaining to heat and mass transfer equations and employs numerical methods to solve them. A cascading effect is determined during one or more operations being performed in the annealing stage, the freezing stage, and the plurality of drying stages.

Further, the structure of an associated state of the product is predicted based on the cascading effect by using the freezing model, and dynamics of the plurality of the drying stages is predicted based on the structure by using the freezing model. The effect across the stages is better understood by way of the following description. For instance, annealing affects the crystallinity of the excipients, and the formation of ice crystals. Formation of ice crystals affects the size of the pores and overall cake structure after the ice has sublimed. For a larger pore size, the primary drying rate is enhanced as primary drying is mass transfer limited and increased pore size reduces mass transfer resistance. However, secondary drying is limited by the area of the cake exposed to the air as it is a desorption process. For a larger pore size distribution, the surface area is generally low and thus the secondary drying process is slower. Thus, the annealing stage affects the freezing stage which in turn affects primary and secondary drying stages. The structure is predicted from the freezing rate, the nucleation temperature, and temperature gradients during freezing. These parameters influence the ice crystal size distribution which essentially influences the pore size distribution.

In an embodiment, the current state of the Lyophilization chamber and an endpoint of the annealing stage, the freezing stage, and the plurality of drying stages are determined using one or more soft sensors. Soft sensors include such as measuring ice fraction during freezing using freezing model, soft sensors measuring the ice content or length of frozen layer during freezing using primary drying model, soft sensors measuring the quantity of bound/sorbed moisture using secondary drying model. The soft sensors are based on the effect of annealing and freezing on the drying stages, in one embodiment of the present disclosure. The soft sensors enable the estimation of Key Performance Indicators (KPIs) that cannot be measured directly but which are necessary for determining endpoints. These include soft sensors for the ice fraction during freezing, the sublimation front position during primary drying, and the sorbed moisture content of the product, and the like.

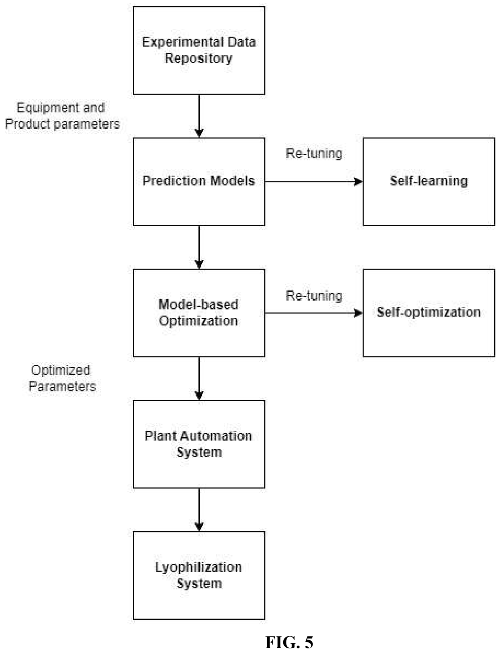

At step 206 of the method of the present disclosure, the one or more hardware processors 104 perform a comparison of the current state of the Lyophilization chamber with a reference state. In an embodiment, the reference state is obtained by optimizing a plurality of process variables, using at least one prediction model. Process variables are the shelf temperature, chamber pressure, and nucleation temperature values. The reference state is determined from the optimal process variables as input. The optimization module of FIG. 2 determines the operating parameters required at the beginning of the Lyophilization process. It is a one-time process for a given product line and equipment used. This module uses the prediction module to estimate the new state of the Lyophilization chamber and optimize the parameters required to achieve the lyophilization operation in optimal time. Optimal operating parameters provided by the module are given to the Lyophilization system via the Plant Automation System. The process variables determination is depicted in FIG. 5. More specifically, FIG. 5, with reference to FIGS. 1 through 4, depicts a block diagram of a process parameter determination module illustrating a process for determining process variables, in accordance with an embodiment of the present disclosure. At step 208 of the method of the present disclosure, the one or more hardware processors 104 generate one or more error signals based on the comparison and the current state.

The steps 206 and 208 are better understood by way of following description:
The system 100 receives real-time data of the Lyophilization chamber through the physical sensors via the data-processing unit of FIG. 2, and estimated state of the Lyophilization chamber from the prediction module. The system 100 compares these values to calculate the error. For example, the prediction module predicts the temperature of the product during the secondary drying stage to be 280 K after 1 hr. However, the temperature of the product in the chamber is 281 K. Thus, there is an error of 1 K. It also receives data from the golden batch and knowledge database repositories. These aid it to decide if the process is progressing as intended.

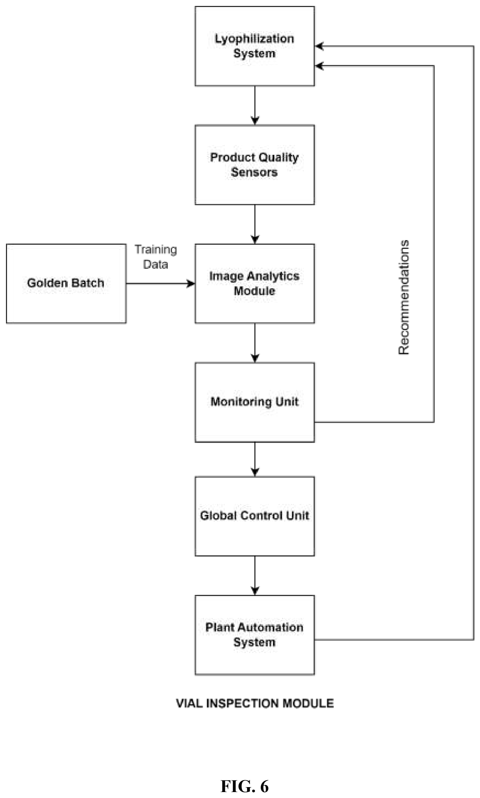

Along with this, the monitoring unit also receives input from the vial-inspection module about the final product quality. This information is provided to the user who then provides appropriate recommendations. The vial-inspection module contains imaging and spectral characterization units. Vial images from the Golden Batches are used to train a convolution neural network (CNN)-based model in the Image Analytics Module. Golden Batch Repository gives time-based profile of the measured values that are recorded for a particular batch or method that met target quality attributes in optimal time. The Knowledge Database module of the system 100 provides time-series data of process parameters for the processes executed earlier. It also includes processes in which faults were encountered. The Image Analytics Module classifies the images as acceptable or unacceptable. In other words, one or more images of the one or more vials are captured and compared with a reference batch image data, to classify the one or more vials as a viable vial or an inviable vial. If unacceptable, it further classifies it as per the defect(s) detected. Using the prediction models, the defects are traced back to the operating conditions. The above step of analyzing the images and classifying the vials is better understood by way of the following description:
The Vial Inspection Module consists of product quality sensors and image classifiers. The product quality sensors include (i) Nuclear Magnetic Resonance (NMR) for measuring the protein content of the vials, and (ii) an imaging unit to capture images of the vials from various angles, NIR spectroscopy for in-line moisture detection. Further, the system 100 includes an image classifier that classifies the images of the vials as viable or inviable. If inviable, the vials are further categorized according to the defect detected (e.g., collapse, melt-back, streaking, spotting, puffing, scorching, cracking, impurities, etc.). Such defects are referred to as a first defect type and a second defect type. For instance, the first defect type is a functional defect type, and the second defect type is a non-functional defect type. The image classifier is a CNN-based tool and uses images of labelled samples for learning. The shelf temperature and the chamber pressure are adjusted based on the first defect type detected in the one or more vials. In other words, the shelf temperature and the chamber pressure are adjusted based on the functional defects detected in the one or more vials. Further, the system 100 generates one or more recommendations to mitigate the second defect type detected in the one or more vials. For example, the appearance of streaks or spots in the vials may be mitigated by providing the user with appropriate recommendation for fill speed. The above steps are depicted in FIG. 6. More specifically, FIG. 6, with reference to FIGS. 1 through 5, depicts a block diagram of a vial inspection module illustrating a process for capturing one or more images of the one or more vials for comparison with a reference batch image data, to classify the one or more vials as a viable vial or an inviable vial, in accordance with an embodiment of the present disclosure.

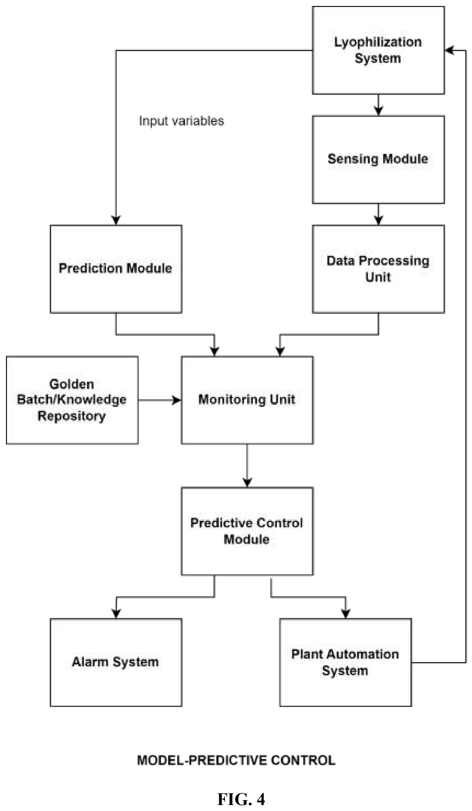

Referring to steps of FIG. 2, at step 210 of the method of the present disclosure, the one or more hardware processors 104 predictively control, by using one or more models, the current state of the Lyophilization chamber through one or more control signals to attain a targeted state of the Lyophilization chamber and a set of state variables, based on the one or more error signals. The target state of the lyophilization process is the optimal state that achieves the target moisture content in minimal time, without compromising on the product quality. For example, if the target state predicts the product temperature to be 235 K during primary drying against a real value of 234.5 K, one or more error signals actuate one or more valves/actuators to control the flow rate or temperature or both of the technical fluid or the chamber pressure - this controlling serves as control signals. State variables are product temperatures during annealing, freezing, primary drying, secondary drying, bound moisture content during primary and secondary drying and ice content during primary drying, crystallinity of the excipient, stress on the protein. The predictive controlling is performed by the Model-predictive Control (MPC) Module of the global control unit of FIG. 2. The Model-predictive Control (MPC) Module uses the prediction module to predict the future state of the Lyophilization chamber/ Lyophilization system. It then makes a corrective decision if the future state of the Lyophilization chamber/Lyophilization system violates one or more constraints. Constraints on the lyophilization system may include the maximum allowable temperature of the product during drying stages which corresponds to the collapse temperature. Another constraint is the maximum allowable vapor flow rate in the duct connecting lyophilization chamber to the condenser chamber which corresponds to the sonic flow condition. Thus, this Model-predictive Control (MPC) Module adjusts the Lyophilization chamber/ Lyophilization system when it goes out of its intended trajectory due to excursions in the system parameters. For example, based on the current trajectory of the Lyophilization chamber/ Lyophilization system and inputs provided, the MPC module predicts that the product's temperature will exceed the critical collapse temperature, accordingly it takes necessary actions to avoid the scenario, like lowering the shelf temperature by manipulating the technical fluid flow rate. In case, the excursion is beyond the control of the plant automation system, the unit's Alarm System is activated. The Plant Automation System consists of control valves and actuators that execute the control action as signaled by the Global Control Unit, in one embodiment of the present disclosure. The process of the predictive control module is depicted in FIG. 4. More specifically, FIG. 4, with reference to FIGS. 1 through 3, depicts a block diagram illustrating a process for predictive control of the current state of the Lyophilization chamber, in accordance with an embodiment of the present disclosure.

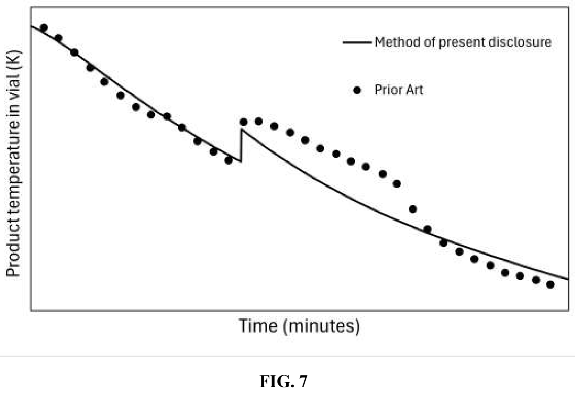

FIG. 7, with reference to FIGS. 1 through 6, depicts a graphical representation illustrating product temperature in vial during freezing stage, in accordance with an embodiment of the present disclosure. The dotted line representation shows the temperature in a vial during freezing experiment by conventional method/literature/prior art.

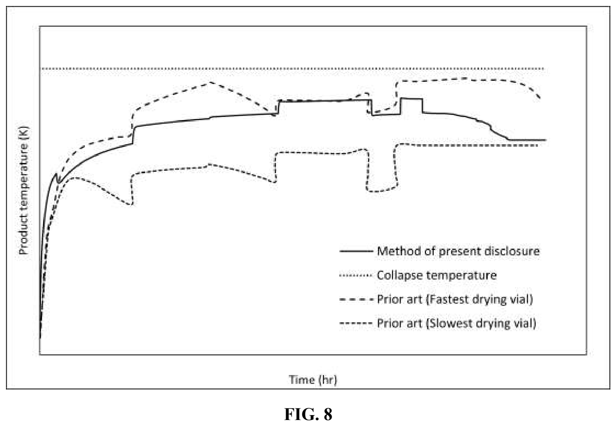

FIG. 8, with reference to FIGS. 1 through 7, depicts a graphical representation illustrating product temperature in the vial during a primary drying stage, in accordance with an embodiment of the present disclosure. The collapse temperature of the product is shown in the horizontal dotted line. The two dashed lines show the fastest and slowest drying vials from experiments by conventional method/literature/prior art.

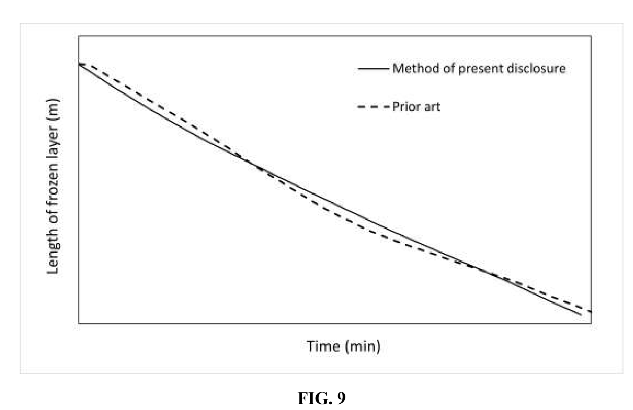

FIG. 9, with reference to FIGS. 1 through 8, depicts a graphical representation illustrating evolution of the length of frozen layer in the vial during the primary drying stage, in accordance with an embodiment of the present disclosure. The graphical representation is a measure of the ice content in the vial. The dashed line shows the sublimation of ice in a vial as predicted by conventional method/literature/prior art.

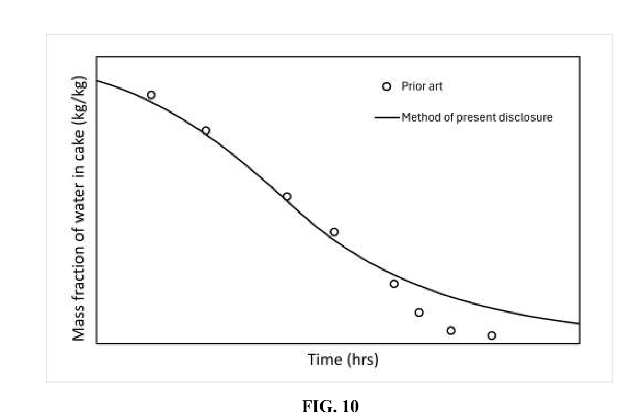

FIG. 10, with reference to FIGS. 1 through 9, depicts a graphical representation illustrating evolution of the sorbed moisture during a secondary drying stage, validated against experimental data, in accordance with an embodiment of the present disclosure. The dots are experimentally evaluated moisture content at various points during an experiment by conventional method/literature/prior art.

### Use case scenario:

The system and method of the present disclosure can be implemented in the pharmaceutical and biopharmaceutical industry where lyophilization is widely performed. Process excursions due to disturbances are common in an industrial setting. The model-predictive control capabilities allow for mitigating such excursions. For example, the failure of the refrigeration system may increase the shelf temperature during any of the operations. In such a case, it is necessary to take appropriate action in order to preserve the batch from any damage. The Global Control Unit is employed for appropriate automatic control of the process.

In the biopharma industry, new product campaigns are undertaken every few months. Since different products may have different requirements and different properties, freeze-drying of different products needs to be carried out differently. For example, a Product A being lyophilized in industry is now replaced with Product B. The final moisture content of Product B is lower than that of Product A. Moreover, Product B has a lower collapse temperature. Determining the operating conditions for Product B given these constraints becomes challenging, and one has to resort to experiments. The design-space (the space of the set of operating conditions) is huge and experiments for exploring this design space is resource-consuming. The model-based optimization module of the system 100 enables determining the operating conditions by providing approximate values of the operating conditions, thus drastically reducing the experiments.

Inspection of vials is performed manually, semi-automatically, or automatically. Manual inspection is impractical for a large number of vials and is subjective. For automatic vial inspection, image analysis is performed on the images of the vials to identify faults. With the system 100 and method of the present disclosure, the faults/defects are determined, classified, and their occurrence is traced back to the operating conditions. For example, the defect in a vial having streaks and spots is retraced to the fill speed of the vials or the defect of scorching can be traced back to excess heating of the sample. Similarly, melt-back or collapse can be traced to insufficient drying or inappropriate freezing.

Freeze-drying currently relies on sampling and off-line characterization. The long characterization times does not reliably give information on the state of the Lyophilization chamber/Lyophilization system. For example, to determine if the secondary drying has been carried out completely, one needs to sample vials from the shelves and characterize them for moisture content. This may take a long while, and if the drying has already been completed during sample extraction, further drying of the product may cause collapse.

Further, use of high concentration proteins and/or crystalline excipients like mannitol necessitate employment of annealing. Annealing protocol for a Product A may be different than that for Product B and needs to be determined through experiments. With the annealing stage implemented by the system 100, the determination of annealing protocol becomes easier.

The system and method of the present disclosure provide an integrated model for lyophilization, where each stage is related to the subsequent stage(s) is incorporated. This model is used for model-based optimization and control of the entire lyophilization process. Optimization and control frameworks incorporate the effect of the freezing stage. The model requires detailed knowledge of the physics of freezing and ice crystal formation. Moreover, the drying models require understanding of heat and mass transfer equations and employ numerical methods to solve them. Implementing Model-based optimization and control is a rigorous mathematical exercise that also requires domain-knowledge. The system provides an optimization module that determines the optimal parameters for a new product for a given equipment. Finding optimal parameters of the lyophilization process is a challenging task as the process parameters have contrasting effects on the stages of the process. Moreover, the structure of ice crystals, being difficult to control, poses a challenge in optimizing the drying stages. The conflicting nature of the primary and secondary drying stage requirements, the presence of product-specific and equipment-specific constraints, and the complexity of the process itself makes the system and method of the present disclosure a technological advancement.

Further, the system and method of the present disclosure incorporate fast, non-invasive spectral and imaging techniques for in-line vial inspection. Further, the defects detected by the inspection module are traced back to the operating parameters thus allowing the user to give recommendations on appropriate use of the equipment. Although the use of image analysis techniques is prevalent in industry for vial inspection, it is challenging to perform a systematic root cause analysis on the defects in the product. Due to the unavailability of a model emphasizing the freezing stage, the system 100 implemented image analysis techniques as known in the art to classify defects and trace them back to the operating conditions. The system 100 and the method of the present disclosure can be implemented in the pharma and biopharma industry, where pharmaceuticals and biopharmaceuticals undergo lyophilization to increase their shelf-life making them commercially viable. In the development stage of biopharmaceuticals and other products which require lyophilization, the system 100 allows for determination of optimal operating parameters. The development stage requires extensive trials which are costly. Providing a set of optimal operating parameters allows for very few trials to be undertaken. The monitoring and fault detection implemented by the system 100 reduces downtime of the equipment, thus enhancing productivity. The system 100 and the method of the present disclosure can also be implemented in the food industry.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, a set of process variables from a Lyophilization chamber, wherein the set of process variables comprises a shelf temperature, and a chamber pressure (202);
predicting, via the one or more hardware processors, a current state of the Lyophilization chamber based on the set of process variables using at least one prediction model (204), wherein the current state of the Lyophilization chamber comprises at least one of a temperature of a product in one or more vials, stresses due to lyophilization on proteins, a crystallinity of one or more excipients, an ice crystal size distribution, an ice content of the one or more vials, and a bound moisture content of the one or more vials;
performing, via the one or more hardware processors, a comparison of the current state of the Lyophilization chamber with a reference state (206);
generating, via the one or more hardware processors, one or more error signals based on the comparison and the current state (208); and
predictively controlling, by using one or more models via the one or more hardware processors, the current state of the Lyophilization chamber through one or more control signals to attain a targeted state of the Lyophilization chamber and a set of state variables, based on the one or more error signals (210).

2. The processor implemented method as claimed in claim 1,
wherein one or more images of the one or more vials are captured and compared with a reference batch image data, to classify the one or more vials as a viable vial or an inviable vial; and
wherein the reference state is obtained by optimizing a plurality of process variables, using the at least one prediction model.

3. The processor implemented method as claimed in claim 2,
wherein the shelf temperature, and the chamber pressure are adjusted based on a first defect type detected in the one or more vials; and
wherein one or more recommendations are generated to mitigate a second defect type detected in the one or more vials.

4. The processor implemented method as claimed in claim 1, wherein the at least one prediction model comprises an annealing stage, a freezing stage, and a plurality of drying stages, wherein a cascading effect is determined during one or more operations being performed in the annealing stage, the freezing stage, and the plurality of drying stages, wherein a structure of an associated state of the product is predicted based on the cascading effect by using the freezing model, and wherein dynamics of the plurality of the drying stages is predicted based on the structure by using the freezing model.

5. The processor implemented method as claimed in claim 4,
wherein the current state of the Lyophilization chamber and an endpoint of the annealing stage, the freezing stage, and the plurality of drying stages are determined using one or more soft sensors; and
wherein the stresses due to lyophilization on the proteins, and the crystallinity of the one or more excipients are predicted at the annealing stage.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a set of process variables from a Lyophilization chamber, wherein the set of process variables comprises a shelf temperature, and a chamber pressure;
predict a current state of the Lyophilization chamber based on the set of process variables using at least one prediction model, wherein the current state of the Lyophilization chamber comprises at least one of a temperature of a product in one or more vials, stresses due to lyophilization on proteins, a crystallinity of one or more excipients, an ice crystal size distribution, an ice content of the one or more vials, and a bound moisture content of the one or more vials;
perform a comparison of the current state of the Lyophilization chamber with a reference state;
generate one or more error signals based on the comparison and the current state; and
predictively control, by using one or more models, the current state of the Lyophilization chamber through one or more control signals to attain a targeted state of the Lyophilization chamber and a set of state variables, based on the one or more error signals.

7. The system as claimed in claim 6,
wherein one or more images of the one or more vials are captured and compared with a reference batch image data, to classify the one or more vials as a viable vial or an inviable vial; and
wherein the reference state is obtained by optimizing a plurality of process variables, using the at least one prediction model.

8. The system as claimed in claim 7,
wherein the shelf temperature and the chamber pressure are adjusted based on a first defect type detected in the one or more vials; and
wherein one or more recommendations are generated to mitigate a second defect type detected in the one or more vials.

9. The system as claimed in claim 6, wherein the at least one prediction model comprises an annealing stage, a freezing stage, and a plurality of drying stages, wherein a cascading effect is determined during one or more operations being performed in the annealing stage, the freezing stage, and the plurality of drying stages, wherein a structure of an associated state of the product is predicted based on the cascading effect by using the freezing model, and wherein dynamics of the plurality of the drying stages is predicted based on the structure by using the freezing model.

10. The system as claimed in claim 9,
wherein the current state of the Lyophilization chamber and an endpoint of the annealing stage, the freezing stage, and the plurality of drying stages are determined using one or more soft sensors; and
wherein the stresses due to lyophilization on the proteins, and the crystallinity of the one or more excipients are predicted at the annealing stage.

11. One or more non-transitory machine-readable information storage mediums comprising one or more instructions which when executed by one or more hardware processors cause:
receiving, a set of process variables from a Lyophilization chamber, wherein the set of process variables comprises a shelf temperature, and a chamber pressure;
predicting, a current state of the Lyophilization chamber based on the set of process variables using at least one prediction model), wherein the current state of the Lyophilization chamber comprises at least one of a temperature of a product in one or more vials, stresses due to lyophilization on proteins, a crystallinity of one or more excipients, an ice crystal size distribution, an ice content of the one or more vials, and a bound moisture content of the one or more vials;
performing, a comparison of the current state of the Lyophilization chamber with a reference state;
generating, one or more error signals based on the comparison and the current state; and
predictively controlling, by using one or more, the current state of the Lyophilization chamber through one or more control signals to attain a targeted state of the Lyophilization chamber and a set of state variables, based on the one or more error signals.

12. The one or more non-transitory machine-readable information storage mediums of claim 11,
wherein one or more images of the one or more vials are captured and compared with a reference batch image data, to classify the one or more vials as a viable vial or an inviable vial; and
wherein the reference state is obtained by optimizing a plurality of process variables, using the at least one prediction model.

13. The one or more non-transitory machine-readable information storage mediums of claim 12,
wherein the shelf temperature, and the chamber pressure are adjusted based on a first defect type detected in the one or more vials; and
wherein one or more recommendations are generated to mitigate a second defect type detected in the one or more vials.

14. The one or more non-transitory machine-readable information storage mediums of claim 11, wherein the at least one prediction model comprises an annealing stage, a freezing stage, and a plurality of drying stages, wherein a cascading effect is determined during one or more operations being performed in the annealing stage, the freezing stage, and the plurality of drying stages, wherein a structure of an associated state of the product is predicted based on the cascading effect by using the freezing model, and wherein dynamics of the plurality of the drying stages is predicted based on the structure by using the freezing model.

15. The one or more non-transitory machine-readable information storage mediums of claim 14,
wherein the current state of the Lyophilization chamber and an endpoint of the annealing stage, the freezing stage, and the plurality of drying stages are determined using one or more soft sensors; and
wherein the stresses due to lyophilization on the proteins, and the crystallinity of the one or more excipients are predicted at the annealing stage.
